# EUROPEAN PATENT SPECIFICATION

(11) **EP 4 505 895 B1**
(45) Date of publication and mention of the grant of the patent: **09.07.2025**
(21) Application number: 23204859.5
(22) Date of filing: 20.10.2023
(51) Int. Cl.: A42B 3/12, A42C 2/00

(54) **SAWDUST HELMET AND MANUFACTURING METHOD**
SÄGEMEHLHELM UND HERSTELLUNGSVERFAHREN
CASQUE À SCIURE ET PROCÉDÉ DE FABRICATION

(30) Priority: 09.08.2023 CN 202310997288
(43) Date of publication of application: 12.02.2025
(73) Proprietor: Dongguan City EON Sporting Goods Co., Ltd., Dongguan, Guangdong (CN)
(72) Inventor: FU, Jiabin, Changting County (CN); WANG, Guoding, Hong Kong (CN)
(74) Representative: Zaboliene, Reda

(56) References cited:
- US-A- 3 447 163
- US-A1- 2014 201 889
- US-A1- 2020 085 130

## Description

### Technical Field

The present invention belongs to the technical field of helmets, and particularly relates to a sawdust helmet and a manufacturing method.

### Background

The existing helmet is generally composed of a helmet body, an inner buffer layer and a wearing device, wherein the helmet body is generally made of hard materials. The buffer layer (body) is arranged on the inner surface of the helmet body for absorbing the impact force generated, and the wearing device is used for fixing the helmet body to the head of a human body.

The buffer layer inside the helmet on the market is basically made of plastic materials, such as EPS, EPP, etc., and there are certain shortcomings in the use process:
The buffer layer has single material and single color. For beautification, the surface is often painted with color ink, film, etc., which increases the processing complexity of the buffer layer and also increases the production cost to a certain extent.

Moreover, the texture of the buffer layer is not particularly good. The texture is single. According to different used materials, the buffer layer is either hard or soft. Based on this, in order to increase the beauty of the buffer layer of the helmet and improve a good feeling of contact between the buffer layer of the helmet and the head (such as softness, comfort, etc.), providing a helmet including a sawdust buffer body has good market prospects.

The document US 2014/0201889 A1, which discloses the preamble of claims 1, 2, 3, 4 and 5, describes a system and method for custom forming protective helmets to fit the unique shape and measurements of a customer's head. The process involves obtaining head data, including the length, width, and specific contours of the customer's head, using methods such as photographs or scans. Using the collected data, a computerized 3D model of the customer's head is generated. This 3D headform is then compared to helmet safety standards to ensure compliance. Based on the 3D headform, a custom helmet is produced at a different location, ensuring it conforms to the precise topography of the customer's head and meets safety standards. This inovation involves a complex, costly customization process using traditional materials and advanced technology. It lacks focus on environmental sustainability.

The document US 2020/0085130 A1 describes a complete helmet assembly designed for sports like baseball, softball, and cricket. It features an inner helmet assembly similar to standard helmets, combined with an exterior shell assembly. The exterior shell assembly includes multiple layers, with an outer hard elastic layer and an inner plastically deformable layer that acts as a crumple zone. This crumple layer deforms upon impact and can be replaced after significant damage. The inner helmet remains reusable, while the outer shell can be easily replaced to restore full protective capability. This innovation requires complex manufacturing with a multi-layer component, increasing production costs and complexity and does not follow an eco-friendly approach.

### Summary

The purpose of the present invention is to provide a sawdust helmet and a manufacturing method to solve problems proposed in the background.

To achieve the above purpose, the present invention provides the following technical solution: a sawdust helmet comprises an outer housing; a buffer body containing sawdust is installed at the inner side of the outer housing; the buffer body is integrally formed, and the size of the buffer body is adapted with the size of the outer housing; a fabric inner cushion body is padded at the inner side of the buffer body; and a helmet belt is fixedly installed at the bottom of the outer housing.

The buffer body is composed of a sawdust layer and a foam material layer;

The sawdust layer is composed of cork chips or non-cork chips.

As a preferred solution of the present invention, the foam material layer has two layers, and the sawdust layer is pressed in the middle of the two foam material layers.

As a preferred solution of the present invention, the foam material layer is provided with a plurality of grooves; the sawdust layer is provided with bulges adapted with the grooves; and when the foam material layers and the sawdust layer are pressed, the bulges are buckled inside the grooves.

As a preferred solution of the present invention, the foam material layer has three layers; the sawdust layer is arranged between two adjacent foam material layers, and a plurality of wedge blocks are connected between the two sawdust layers penetratively; the surfaces of the foam material layers are provided with wedge grooves adapted with the sizes of the wedge blocks; and when the foam material layers and the sawdust layers are pressed, the wedge blocks are buckled inside the wedge grooves.

As a preferred solution of the present invention, the sawdust layer is a round or polygonal sawdust insert; the surface of the foam material layer is provided with an embedding groove adapted with the sawdust insert; and when the foam material layer and the sawdust layer are pressed, the sawdust insert is buckled inside the embedding groove.

As a preferred solution of the present invention, the bottom of the sawdust layer is provided with a wavy first arc part; the surface of the foam material layer is provided with a wavy second arc part; and when the foam material layer and the sawdust layer are pressed, the first arc part and the second arc part are closely fitted.

A manufacturing method of the sawdust helmet, used for manufacturing the sawdust helmet of any one of the above, comprises the following steps:
S1, conducting injection molding of the outer housing;
S2, processing the buffer body comprising the sawdust layer and the foam material layer;
S3, processing the fabric inner cushion body; after the buffer body and the outer housing are assembled, padding the inner cushion body at the inner side of the buffer body, and then selecting an appropriate helmet belt for installation with the outer housing.

As a preferred solution of the present invention, in the step S2, the sawdust of the sawdust layer is evenly or unevenly distributed on the surface of the foam material layer; then the buffer body is processed by extrusion and high temperature steam forming; and the number, size and shape of the sawdust of the sawdust layer on the surface of the foam material layer are not limited, and can be adjusted according to the buffering performance need of the buffer body.

As a preferred solution of the present invention, after the sawdust layer and the foam material layer are pressed and formed in the step S2, the sawdust layers with different shapes and arrangement modes form decorative layers on the surface of the buffer body.

Compared with the prior art, the present invention has the following beneficial effects:
1) The buffer body is composed of the sawdust layer and the foam material layer, and the decorative pattern formed by the sawdust can increase the beauty of the helmet. Through the selection of the sawdust with different shapes, sizes and materials in the sawdust layer, combined with the foam material layer, the performance of the softness and the comfort of the buffer body can be increased according to the processing need of the buffer body and the good feeling of contact between the buffer body of the helmet and the head is improved so that the helmet adapted with the buffer body is more competitive in the market.
2) When the buffer body is processed, the sawdust layer and the foam material layer are pressed and formed only by extrusion and high temperature steam processing. Compared with the buffer body decorated by the technologies of coating with color ink and film, the buffer body of the sawdust helmet in the present invention can complete the processing of the buffer body more quickly, the sawdust material is more environmentally friendly while ensuring the beauty and the practicality of the helmet and the production cost of the helmet can be effectively reduced.

### Description of Drawings

The drawings are used to provide further understanding for the present invention and constitute part of the description. The drawings are used to explain the present invention together with the embodiments of the present invention, and do not constitute a limitation to the present invention. In the drawings:
Fig. 1 is a structural schematic diagram of the present invention;
Fig. 2 is a local splitting schematic diagram of the present invention;
Fig. 3 is a structural schematic diagram of a buffer body of the present invention;
Fig. 4 is a structural schematic diagram of a buffer body in embodiment 1 of the present invention;
Fig. 5 is a structural schematic diagram of a buffer body in embodiment 2 of the present invention;
Fig. 6 is a structural schematic diagram of a buffer body in embodiment 3 of the present invention;
Fig. 7 is a structural schematic diagram of a buffer body in embodiment 4 of the present invention;
Fig. 8 is a structural schematic diagram of a buffer body in embodiment 5 of the present invention.

In the drawings: 1 outer housing; 2 buffer body; 21 sawdust layer; 211 bulge; 212 wedge block; 213 sawdust insert; 214 first arc part; 22 foam material layer; 221 groove; 222 wedge groove; 223 embedding groove; 224 second arc part; 3 fabric inner cushion body; 4 helmet belt.

### Detailed Description

The technical solutions in the embodiments of the present invention will be clearly and fully described below in combination with the drawings in the embodiments of the present invention. Apparently, the described embodiments are merely part of the embodiments of the present invention, not all of the embodiments. Based on the embodiments in the present invention, all other embodiments obtained by those ordinary skilled in the art without contributing creative labor will belong to the protection scope of the present invention.

### Embodiment 1

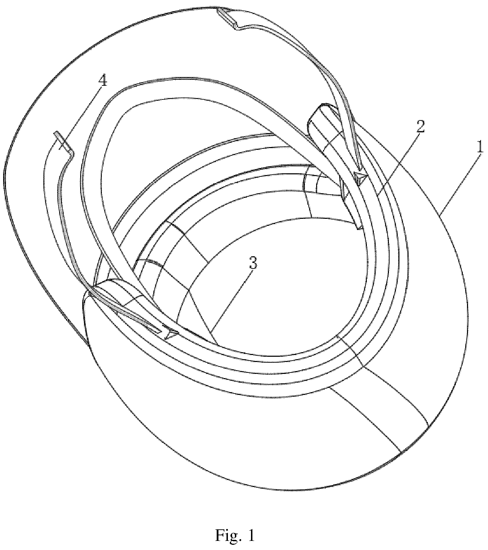

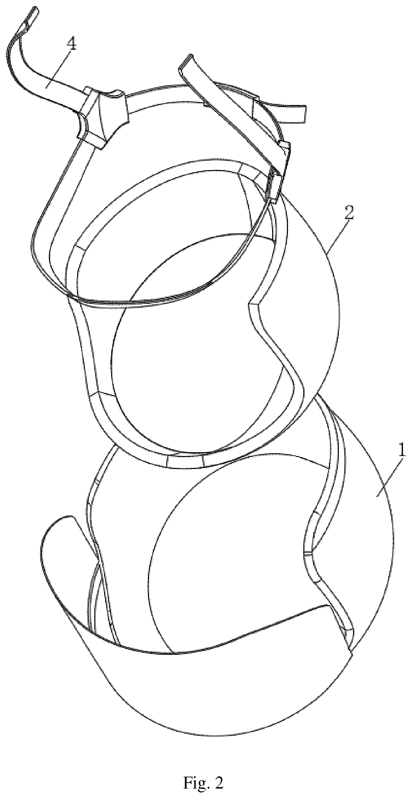

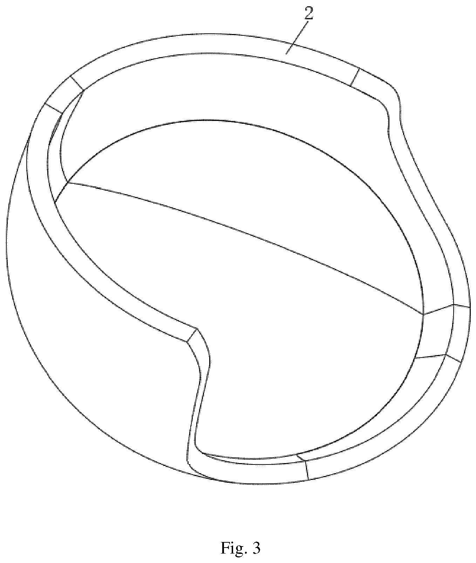

By referring to Figs. 1-4, the present invention provides the following technical solution: a sawdust helmet comprises an outer housing 1; a buffer body 2 containing sawdust is installed at the inner side of the outer housing 1; the buffer body 2 is integrally formed, and the size of the buffer body 2 is adapted with the size of the outer housing 1; a fabric inner cushion body 3 is padded at the inner side of the buffer body 2; and a helmet belt 4 is fixedly installed at the bottom of the outer housing 1. The buffer body 2 is composed of a sawdust layer 21 and a foam material layer 22. The sawdust layer 21 is composed of cork chips or non-cork chips.

Specifically, through the selection of the buffer body 2 processed by integral formation of the sawdust layer 21 and the foam material layer 22, the buffer body 2 can be formed quickly. Because the sawdust material is selected creatively in the buffer body 2, through the selection of the sawdust with different shapes, sizes and materials and combined with the foam material layer 22, the performance of the softness and the comfort of the buffer body 2 can be increased according to the processing need of the buffer body and the good feeling of contact between the buffer body 2 and the head is improved so that the helmet adapted with the buffer body is more competitive in the market. The padded fabric inner cushion body 3 is in contact with the head and has good air permeability, which can further increase the comfort of wearing the helmet. The installed helmet belt 4 can be provided with a belt buckle. When the helmet is worn, the helmet belt 4 is locked by the belt buckle. The helmet is effectively prevented from accidentally slipping off the head of a wearer in the event of an accident.

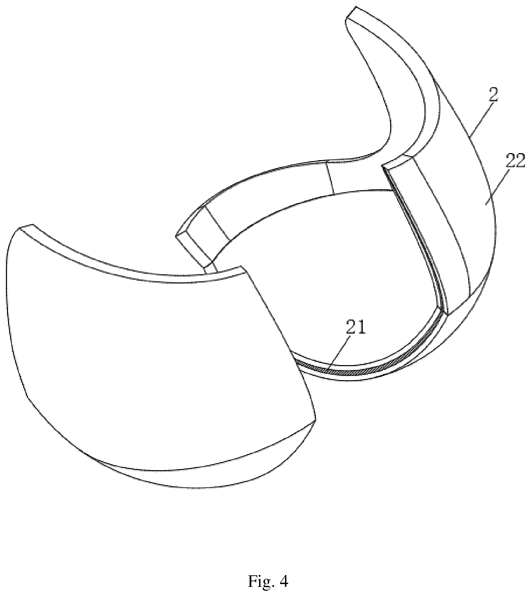

By referring to Fig. 4, in the present embodiment: the foam material layer 22 has two layers, and the sawdust layer 21 is pressed in the middle of the two foam material layers 22.

Specifically, two foam material layers 22 are selected, then the sawdust layer 21 is clamped between the two foam material layers 22, and the buffer body 2 is processed by extrusion and high temperature steam processing pressing process. The buffering performance of the buffer body 2 can be effectively ensured by matching the sawdust layer 21 with the foam material layers 22. Of course, those skilled in the art can also select two sawdust layers 21, and then a foam material layer 22 is clamped between the sawdust layers 21 and then molded and processed to obtain the buffer body 2. The buffer body 2 can also be used for providing good buffering performance for the helmet.

### Embodiment 2

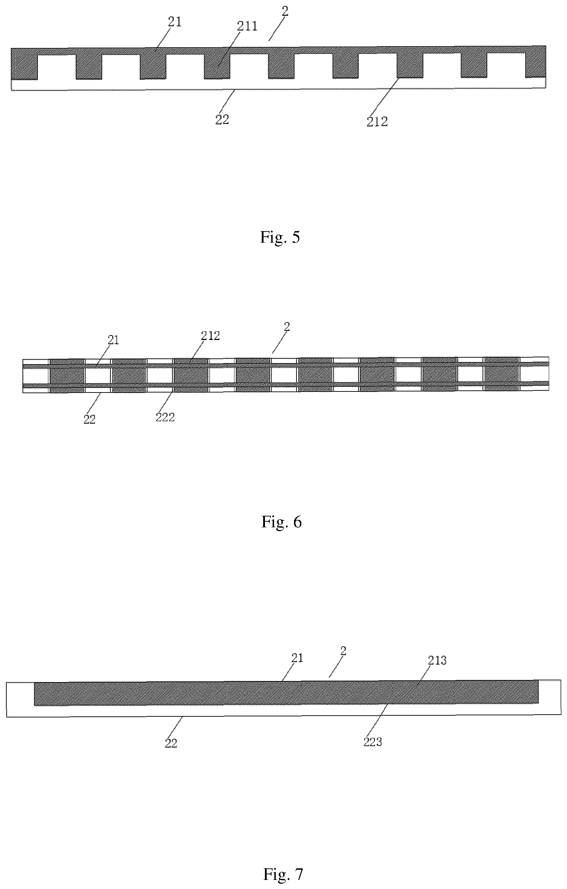

By referring to Fig. 5, in the present embodiment: the foam material layer 22 is provided with a plurality of grooves 221; the sawdust layer 21 is provided with bulges 211 adapted with the grooves 221; and when the foam material layer 22 and the sawdust layer 21 are pressed, the bulges 211 are buckled inside the grooves 221.

Specifically, when the foam material layer 22 is processed, a plurality of grooves 221 are processed at the same time. When the sawdust layer 21 is processed, a plurality of bulges 211 are processed. When the sawdust layer 21 and the foam material layer 22 are pressed and formed by extrusion and high temperature steam processing, the bulges 211 are buckled inside the grooves 221, which can effectively ensure the firmness of the two when pressed. The sawdust layer 21 provided with a plurality of bulges 211 simultaneously can also change the buffering performance of the buffer body 2, increase the applicability of the buffer body 2 and realize the personalized customization of the buffer body 2.

### Embodiment 3

By referring to Fig. 6, in the present embodiment: the foam material layer 22 has three layers; the sawdust layer 21 is arranged between two adjacent foam material layers 22, and a plurality of wedge blocks 212 are connected between the two sawdust layers 21 penetratively; the surfaces of the foam material layers 22 are provided with wedge grooves 222 adapted with the sizes of the wedge blocks 212; and when the foam material layers 22 and the sawdust layers 21 are pressed, the wedge blocks 212 are buckled inside the wedge grooves 222.

Specifically, when the foam material layer 22 is processed, a plurality of wedge grooves 222 are processed at the same time. When the sawdust layer 21 is processed, a plurality of wedge blocks 212 are processed individually. When the sawdust layer 21 and the foam material layer 22 are pressed and formed by extrusion and high temperature steam processing, the wedge blocks 212 are buckled inside the wedge grooves 222, which can also effectively ensure the firmness of the two when pressed. The sawdust layer 21 provided with a plurality of wedge blocks 212 simultaneously can also change the buffering performance of the buffer body 2, also increase the applicability of the buffer body 2 and realize the personalized customization of the buffer body 2.

### Embodiment 4

By referring to Fig. 7, in the present embodiment: the sawdust layer 21 is a round or polygonal sawdust insert 213; the surface of the foam material layer 22 is provided with an embedding groove 223 adapted with the sawdust insert 213; and when the foam material layer 22 and the sawdust layer 21 are pressed, the sawdust insert 213 is buckled inside the embedding groove 223.

Specifically, when the foam material layer 22 is processed, the embedding groove 223 is processed at the same time. The sawdust insert 213 adapted with the embedding groove 223 is processed as the sawdust layer 21. When the sawdust layer 21 and the foam material layer 22 are pressed and formed by extrusion and high temperature steam processing, the sawdust insert 213 is embedded inside the embedding groove 223, which can also effectively ensure the firmness of the two when pressed. The sawdust insert 213 arranged simultaneously can also change the buffering performance of the buffer body 2, also increase the applicability of the buffer body 2 and realize the personalized customization of the buffer body 2. Through the selection of the sawdust inserts 213 with different shapes, the sawdust layer 21 can form different decorative patterns.

### Embodiment 5

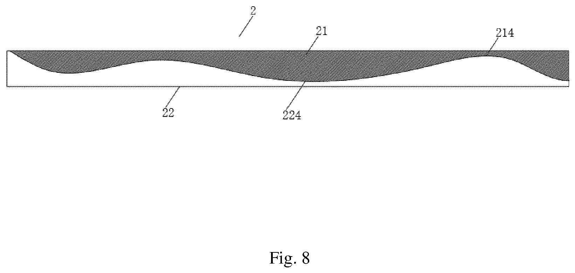

By referring to Fig. 8, the bottom of the sawdust layer 21 is provided with a wavy first arc part 214; the surface of the foam material layer 22 is provided with a wavy second arc part 224; and when the foam material layer 22 and the sawdust layer 21 are pressed, the first arc part 214 and the second arc part 224 are closely fitted.

Specifically, when the foam material layer 22 is processed, the second arc part 224 is processed at the same time. When the sawdust layer 21 is processed, the first arc part 214 is processed at the same time. When the sawdust layer 21 and the foam material layer 22 are pressed and formed by extrusion and high temperature steam processing, the second arc part 224 and the first arc part 214 are closely fitted, which can also effectively ensure the firmness of the two when pressed. The first arc part 214 arranged at the same time is matched with the sawdust layer 21, which can also change the buffering performance of the buffer body 2, also increase the applicability of the buffer body 2 and realize the personalized customization of the buffer body 2.

A manufacturing method of the sawdust helmet, used for manufacturing the sawdust helmet of any one of the above, comprises the following steps:
S1, conducting injection molding of the outer housing 1;
S2, processing the buffer body 2 comprising the sawdust layer 21 and the foam material layer 22;
S3, processing the fabric inner cushion body 3; after the buffer body 2 and the outer housing 1 are assembled, padding the inner cushion body 3 at the inner side of the buffer body 2, and then selecting an appropriate helmet belt 4 for installation with the outer housing 1.

In the present embodiment: in the step S2, the sawdust of the sawdust layer 21 is evenly or unevenly distributed on the surface of the foam material layer 22; then the buffer body 2 is processed by extrusion and high temperature steam forming; and the number, size and shape of the sawdust of the sawdust layer 21 on the surface of the foam material layer 22 are not limited, and can be adjusted according to the buffering performance need of the buffer body 2.

Specifically, the buffering performance of the buffer body 2 can be adjusted by flexibly selecting the number, size and shape of the sawdust of the sawdust layer 21.

In the present embodiment: after the sawdust layer 21 and the foam material layer 22 are pressed and formed in the step S2, the sawdust layers 21 with different shapes and arrangement modes form decorative layers on the surface of the buffer body 2.

Specifically, by adjusting the number, size, shape and arrangement mode of the sawdust of the sawdust layer 21, the sawdust layers 21 can form different decorative patterns, which can further realize the personalized customization of the buffer body 2.

## Claims

1. A sawdust helmet, comprising an outer housing (1), wherein a buffer body (2) containing sawdust is installed at the inner side of the outer housing (1); the buffer body (2) is integrally formed, and the size of the buffer body (2) is adapted with the size of the outer housing (1); a fabric inner cushion body (3) is padded at the inner side of the buffer body (2); and a helmet belt (4) is fixedly installed at the bottom of the outer housing (1);
the buffer body (2) is composed of a sawdust layer (21) and a foam material layer (22);
the sawdust layer (21) is composed of cork chips or non-cork chips
**characterized in that**
the foam material layer (22) has two layers, and the sawdust layer (21) is pressed in the middle of the two foam material layers (22).

2. A sawdust helmet, comprising an outer housing (1), wherein a buffer body (2) containing sawdust is installed at the inner side of the outer housing (1); the buffer body (2) is integrally formed, and the size of the buffer body (2) is adapted with the size of the outer housing (1); a fabric inner cushion body (3) is padded at the inner side of the buffer body (2); and a helmet belt (4) is fixedly installed at the bottom of the outer housing (1);
the buffer body (2) is composed of a sawdust layer (21) and a foam material layer (22);
the sawdust layer (21) is composed of cork chips or non-cork chips
**characterized in that**
the foam material layer (22) is provided with a plurality of grooves (221); the sawdust layer (21) is provided with bulges (211) adapted with the grooves (221); and when the foam material layer (22) and the sawdust layer (21) are pressed, the bulges (211) are buckled inside the grooves (221).

3. A sawdust helmet, comprising an outer housing (1), wherein a buffer body (2) containing sawdust is installed at the inner side of the outer housing (1); the buffer body (2) is integrally formed, and the size of the buffer body (2) is adapted with the size of the outer housing (1); a fabric inner cushion body (3) is padded at the inner side of the buffer body (2); and a helmet belt (4) is fixedly installed at the bottom of the outer housing (1);
the buffer body (2) is composed of a sawdust layer (21) and a foam material layer (22);
the sawdust layer (21) is composed of cork chips or non-cork chips
**characterized in that**
the foam material layer (22) has three layers; the sawdust layer (21) is arranged between two adjacent foam material layers (22), and a plurality of wedge blocks (212) are connected between the two sawdust layers (21) penetratively; the surfaces of the foam material layers (22) are provided with wedge grooves (222) adapted with the sizes of the wedge blocks (212); and when the foam material layers (22) and the sawdust layers (21) are pressed, the wedge blocks (212) are buckled inside the wedge grooves (222).

4. A sawdust helmet, comprising an outer housing (1), wherein a buffer body (2) containing sawdust is installed at the inner side of the outer housing (1); the buffer body (2) is integrally formed, and the size of the buffer body (2) is adapted with the size of the outer housing (1); a fabric inner cushion body (3) is padded at the inner side of the buffer body (2); and a helmet belt (4) is fixedly installed at the bottom of the outer housing (1);
the buffer body (2) is composed of a sawdust layer (21) and a foam material layer (22);
the sawdust layer (21) is composed of cork chips or non-cork chips
**characterized in that**
the sawdust layer (21) is a round or polygonal sawdust insert (213); the surface of the foam material layer (22) is provided with an embedding groove (223) adapted with the sawdust insert (213); and when the foam material layer (22) and the sawdust layer (21) are pressed, the sawdust insert (213) is buckled inside the embedding groove (223).

5. A sawdust helmet, comprising an outer housing (1), wherein a buffer body (2) containing sawdust is installed at the inner side of the outer housing (1); the buffer body (2) is integrally formed, and the size of the buffer body (2) is adapted with the size of the outer housing (1); a fabric inner cushion body (3) is padded at the inner side of the buffer body (2); and a helmet belt (4) is fixedly installed at the bottom of the outer housing (1);
the buffer body (2) is composed of a sawdust layer (21) and a foam material layer (22);
the sawdust layer (21) is composed of cork chips or non-cork chips
**characterized in that**
the bottom of the sawdust layer (21) is provided with a wavy first arc part (214); the surface of the foam material layer (22) is provided with a wavy second arc part (224); and when the foam material layer (22) and the sawdust layer (21) are pressed, the first arc part (214) and the second arc part (224) are closely fitted.

6. A manufacturing method of the sawdust helmet, used for manufacturing the sawdust helmet of any one of claims 1-5, comprising the following steps:
S1, conducting injection molding of the outer housing (1);
S2, processing the buffer body (2) comprising the sawdust layer (21) and the foam material layer (22);
S3, processing the fabric inner cushion body (3); after the buffer body (2) and the outer housing (1) are assembled, padding the inner cushion body (3) at the inner side of the buffer body (2), and then selecting an appropriate helmet belt (4) for installation with the outer housing (1).

7. The manufacturing method of the sawdust helmet according to claim 6, wherein in the step S2, the sawdust of the sawdust layer (21) is evenly or unevenly distributed on the surface of the foam material layer (22); then the buffer body (2) is processed by extrusion and high temperature steam forming; and the number, size and shape of the sawdust of the sawdust layer (21) on the surface of the foam material layer (22) are not limited, and can be adjusted according to the buffering performance need of the buffer body (2).

8. The manufacturing method of the sawdust helmet according to claim 6, wherein after the sawdust layer (21) and the foam material layer (22) are pressed and formed in the step S2, the sawdust layers (21) with different shapes and arrangement modes form decorative layers on the surface of the buffer body (2).

## Patentansprüche

1. Ein Sägemehlhelm, umfassend ein äußeres Gehäuse (1), wobei ein Dämpfungskörper (2), der Sägemehl enthält, an der Innenseite des äußeren Gehäuses (1) angebracht ist; der Dämpfungskörper (2) ist einstückig ausgebildet, und die Größe des Dämpfungskörpers (2) ist an die Größe des äußeren Gehäuses (1) angepasst; ein inneres Polsterteil aus Stoff (3) ist an der Innenseite des Dämpfungskörpers (2) angebracht; und ein Helmriemen (4) ist fest am unteren Ende des äußeren Gehäuses (1) installiert;
der Dämpfungskörper (2) besteht aus einer Sägemehlschicht (21) und einer Schaummaterialschicht (22);
die Sägemehlschicht (21) besteht aus Korkspänen oder Nicht-Korkspänen,
**dadurch gekennzeichnet, dass**
die Schaummaterialschicht (22) zwei Schichten aufweist, und die Sägemehlschicht (21) zwischen den beiden Schaummaterialschichten (22) eingepresst ist.

2. Ein Sägemehlhelm, umfassend ein äußeres Gehäuse (1), wobei ein Dämpfungskörper (2), der Sägemehl enthält, an der Innenseite des äußeren Gehäuses (1) angebracht ist; der Dämpfungskörper (2) ist einstückig ausgebildet, und die Größe des Dämpfungskörpers (2) ist an die Größe des äußeren Gehäuses (1) angepasst; ein inneres Polsterteil aus Stoff (3) ist an der Innenseite des Dämpfungskörpers (2) angebracht; und ein Helmriemen (4) ist fest am unteren Ende des äußeren Gehäuses (1) installiert;
der Dämpfungskörper (2) besteht aus einer Sägemehlschicht (21) und einer Schaummaterialschicht (22);
die Sägemehlschicht (21) besteht aus Korkspänen oder Nicht-Korkspänen,
**dadurch gekennzeichnet, dass**
die Schaummaterialschicht (22) mit einer Vielzahl von Rillen (221) versehen ist; die Sägemehlschicht (21) weist Vorsprünge (211) auf, die an die Rillen (221) angepasst sind; und wenn die Schaummaterialschicht (22) und die Sägemehlschicht (21) gepresst werden, rasten die Vorsprünge (211) in die Rillen (221) ein.

3. Ein Sägemehlhelm, umfassend ein äußeres Gehäuse (1), wobei ein Dämpfungskörper (2), der Sägemehl enthält, an der Innenseite des äußeren Gehäuses (1) angebracht ist; der Dämpfungskörper (2) ist einstückig ausgebildet, und die Größe des Dämpfungskörpers (2) ist an die Größe des äußeren Gehäuses (1) angepasst; ein inneres Polsterteil aus Stoff (3) ist an der Innenseite des Dämpfungskörpers (2) angebracht; und ein Helmriemen (4) ist fest am unteren Ende des äußeren Gehäuses (1) installiert;
der Dämpfungskörper (2) besteht aus einer Sägemehlschicht (21) und einer Schaummaterialschicht (22);
die Sägemehlschicht (21) besteht aus Korkspänen oder Nicht-Korkspänen,
**dadurch gekennzeichnet, dass**
die Schaummaterialschicht (22) drei Schichten aufweist; die Sägemehlschicht (21) ist zwischen zwei benachbarten Schaummaterialschichten (22) angeordnet, und eine Vielzahl von Keilblöcken (212) ist durchgehend zwischen den beiden Sägemehlschichten (21) verbunden; die Oberflächen der Schaummaterialschichten (22) sind mit Keilnuten (222) versehen, die an die Größen der Keilblöcke (212) angepasst sind; und wenn die Schaummaterialschichten (22) und die Sägemehlschichten (21) gepresst werden, rasten die Keilblöcke (212) in die Keilnuten (222) ein.

4. Ein Sägemehlhelm, umfassend ein äußeres Gehäuse (1), wobei ein Dämpfungskörper (2), der Sägemehl enthält, an der Innenseite des äußeren Gehäuses (1) angebracht ist; der Dämpfungskörper (2) ist einstückig ausgebildet, und die Größe des Dämpfungskörpers (2) ist an die Größe des äußeren Gehäuses (1) angepasst; ein inneres Polsterteil aus Stoff (3) ist an der Innenseite des Dämpfungskörpers (2) angebracht; und ein Helmriemen (4) ist fest am unteren Ende des äußeren Gehäuses (1) installiert;
der Dämpfungskörper (2) besteht aus einer Sägemehlschicht (21) und einer Schaummaterialschicht (22);
die Sägemehlschicht (21) besteht aus Korkspänen oder Nicht-Korkspänen,
**dadurch gekennzeichnet, dass**
die Sägemehlschicht (21) ein runder oder polygonaler Sägemehleinsatz (213) ist; die Oberfläche der Schaummaterialschicht (22) ist mit einer Einbettungsnut (223) versehen, die an den Sägemehleinsatz (213) angepasst ist; und wenn die Schaummaterialschicht (22) und die Sägemehlschicht (21) gepresst werden, rastet der Sägemehleinsatz (213) in der Einbettungsnut (223) ein.

5. Ein Sägemehlhelm, umfassend ein äußeres Gehäuse (1), wobei ein Dämpfungskörper (2), der Sägemehl enthält, an der Innenseite des äußeren Gehäuses (1) angebracht ist; der Dämpfungskörper (2) ist einstückig ausgebildet, und die Größe des Dämpfungskörpers (2) ist an die Größe des äußeren Gehäuses (1) angepasst; ein inneres Polsterteil aus Stoff (3) ist an der Innenseite des Dämpfungskörpers (2) angebracht; und ein Helmriemen (4) ist fest am unteren Ende des äußeren Gehäuses (1) installiert;
der Dämpfungskörper (2) besteht aus einer Sägemehlschicht (21) und einer Schaummaterialschicht (22);
die Sägemehlschicht (21) besteht aus Korkspänen oder Nicht-Korkspänen,
**dadurch gekennzeichnet, dass**
die Unterseite der Sägemehlschicht (21) mit einem wellenförmigen ersten Bogenabschnitt (214) versehen ist; die Oberfläche der Schaummaterialschicht (22) ist mit einem wellenförmigen zweiten Bogenabschnitt (224) versehen; und wenn die Schaummaterialschicht (22) und die Sägemehlschicht (21) gepresst werden, liegen der erste Bogenabschnitt (214) und der zweite Bogenabschnitt (224) eng aneinander an.

6. Ein Herstellungsverfahren für den Sägemehlhelm, das zur Herstellung des Sägemehlhelms gemäß einem der Ansprüche 1 bis 5 verwendet wird, umfassend die folgenden Schritte:
S1, Durchführung des Spritzgießens des äußeren Gehäuses (1);
S2, Verarbeitung des Dämpfungskörpers (2), der die Sägemehlschicht (21) und die Schaummaterialschicht (22) umfasst;
S3, Verarbeitung des inneren Polsterteils aus Stoff (3); nach dem Zusammenbau des Dämpfungskörpers (2) und des äußeren Gehäuses (1) wird das innere Polsterteil (3) an der Innenseite des Dämpfungskörpers (2) eingelegt, und anschließend wird ein geeigneter Helmriemen (4) zur Montage mit dem äußeren Gehäuse (1) ausgewählt.

7. Das Herstellungsverfahren für den Sägemehlhelm nach Anspruch 6, wobei im Schritt S2 die Sägemehlbestandteile der Sägemehlschicht (21) gleichmäßig oder ungleichmäßig auf der Oberfläche der Schaummaterialschicht (22) verteilt sind; anschließend wird der Dämpfungskörper (2) durch Extrusion und Hochtemperatur-Dampfformung verarbeitet; und Anzahl, Größe und Form der Sägemehlbestandteile der Sägemehlschicht (21) auf der Oberfläche der Schaummaterialschicht (22) sind nicht begrenzt und können entsprechend dem Bedarf an Dämpfungsleistung des Dämpfungskörpers (2) angepasst werden.

8. Das Herstellungsverfahren für den Sägemehlhelm nach Anspruch 6, wobei nach dem Pressen und Formen der Sägemehlschicht (21) und der Schaummaterialschicht (22) im Schritt S2 Sägemehlschichten (21) mit unterschiedlichen Formen und Anordnungen dekorative Schichten auf der Oberfläche des Dämpfungskörpers (2) bilden.

## Revendications

1. Un casque à sciure, comprenant une coque extérieure (1), où un corps tampon (2) contenant de la sciure étant installé sur la face interne de la coque extérieure (1); le corps tampon (2) est formé d'une seule pièce, et la dimension du corps tampon (2) est adaptée à celle de la coque extérieure (1); un corps de coussin intérieur en tissu (3) est placé sur la face interne du corps tampon (2); et une sangle de casque (4) est fixée de manière permanente au bas de la coque extérieure (1);
le corps tampon (2) est composé d'une couche de sciure (21) et d'une couche de matériau en mousse (22);
la couche de sciure (21) est constituée de copeaux de liège ou de copeaux non-liège,
**caractérisé en ce que**
la couche de matériau en mousse (22) comporte deux couches, et la couche de sciure (21) est pressée entre les deux couches de matériau en mousse (22).

2. Un casque à sciure, comprenant une coque extérieure (1), où un corps tampon (2) contenant de la sciure étant installé sur la face interne de la coque extérieure (1); le corps tampon (2) est formé d'une seule pièce, et la dimension du corps tampon (2) est adaptée à celle de la coque extérieure (1); un corps de coussin intérieur en tissu (3) est placé sur la face interne du corps tampon (2); et une sangle de casque (4) est fixée de manière permanente au bas de la coque extérieure (1);
le corps tampon (2) est composé d'une couche de sciure (21) et d'une couche de matériau en mousse (22);
la couche de sciure (21) est constituée de copeaux de liège ou de copeaux non-liège,
**caractérisé en ce que**
la couche de matériau en mousse (22) est pourvue d'une pluralité de rainures (221); la couche de sciure (21) est pourvue de renflements (211) adaptés aux rainures (221); et, lorsque la couche de matériau en mousse (22) et la couche de sciure (21) sont pressées, les renflements (211) s'emboîtent à l'intérieur des rainures (221).

3. Un casque à sciure, comprenant une coque extérieure (1), où un corps tampon (2) contenant de la sciure étant installé sur la face interne de la coque extérieure (1); le corps tampon (2) est formé d'une seule pièce, et la dimension du corps tampon (2) est adaptée à celle de la coque extérieure (1); un corps de coussin intérieur en tissu (3) est placé sur la face interne du corps tampon (2); et une sangle de casque (4) est fixée de manière permanente au bas de la coque extérieure (1);
le corps tampon (2) est composé d'une couche de sciure (21) et d'une couche de matériau en mousse (22);
la couche de sciure (21) est constituée de copeaux de liège ou de copeaux non-liège,
**caractérisé en ce que**
la couche de matériau en mousse (22) comporte trois couches; la couche de sciure (21) est disposée entre deux couches adjacentes de matériau en mousse (22), et une pluralité de blocs en coin (212) sont connectés de manière traversante entre les deux couches de sciure (21); les surfaces des couches de matériau en mousse (22) sont pourvues de rainures en coin (222) adaptées aux dimensions des blocs en coin (212); et, lorsque les couches de matériau en mousse (22) et les couches de sciure (21) sont pressées, les blocs en coin (212) s'emboîtent à l'intérieur des rainures en coin (222).

4. Un casque à sciure, comprenant une coque extérieure (1), où un corps tampon (2) contenant de la sciure étant installé sur la face interne de la coque extérieure (1); le corps tampon (2) est formé d'une seule pièce, et la dimension du corps tampon (2) est adaptée à celle de la coque extérieure (1); un corps de coussin intérieur en tissu (3) est placé sur la face interne du corps tampon (2); et une sangle de casque (4) est fixée de manière permanente au bas de la coque extérieure (1);
le corps tampon (2) est composé d'une couche de sciure (21) et d'une couche de matériau en mousse (22);
la couche de sciure (21) est constituée de copeaux de liège ou de copeaux non-liège,
**caractérisé en ce que**
la couche de sciure (21) est un insert de sciure (213) de forme ronde ou polygonale; la surface de la couche de matériau en mousse (22) est pourvue d'une rainure d'encastrement (223) adaptée à l'insert de sciure (213); et, lorsque la couche de matériau en mousse (22) et la couche de sciure (21) sont pressées, l'insert de sciure (213) s'emboîte à l'intérieur de la rainure d'encastrement (223).

5. Un casque à sciure, comprenant une coque extérieure (1), où un corps tampon (2) contenant de la sciure étant installé sur la face interne de la coque extérieure (1); le corps tampon (2) est formé d'une seule pièce, et la dimension du corps tampon (2) est adaptée à celle de la coque extérieure (1); un corps de coussin intérieur en tissu (3) est placé sur la face interne du corps tampon (2); et une sangle de casque (4) est fixée de manière permanente au bas de la coque extérieure (1);
le corps tampon (2) est composé d'une couche de sciure (21) et d'une couche de matériau en mousse (22);
la couche de sciure (21) est constituée de copeaux de liège ou de copeaux non-liège,
**caractérisé en ce que**
le bas de la couche de sciure (21) est pourvu d'une première partie arquée ondulée (214); la surface de la couche de matériau en mousse (22) est pourvue d'une seconde partie arquée ondulée (224); et, lorsque la couche de matériau en mousse (22) et la couche de sciure (21) sont pressées, la première partie arquée (214) et la seconde partie arquée (224) s'ajustent étroitement.

6. Un procédé de fabrication du casque à sciure, utilisé pour fabriquer le casque à sciure selon l'une quelconque des revendications 1 à 5, comprenant les étapes suivantes:
S1, réaliser le moulage par injection de la coque extérieure (1);
S2, traiter le corps tampon (2) comprenant la couche de sciure (21) et la couche de matériau en mousse (22);
S3, traiter le corps de coussin intérieur en tissu (3); après assemblage du corps tampon (2) et de la coque extérieure (1), placer le corps de coussin intérieur (3) sur la face interne du corps tampon (2), puis sélectionner une sangle de casque (4) appropriée pour son installation avec la coque extérieure (1).

7. Le procédé de fabrication du casque à sciure selon la revendication 6, dans lequel, à l'étape S2, la sciure de la couche de sciure (21) est répartie de manière uniforme ou non uniforme sur la surface de la couche de matériau en mousse (22); ensuite, le corps tampon (2) est traité par extrusion et formage à la vapeur haute température; et le nombre, la taille et la forme de la sciure de la couche de sciure (21) sur la surface de la couche de matériau en mousse (22) ne sont pas limités, et peuvent être ajustés en fonction des besoins de performance d'amortissement du corps tampon (2).

8. Le procédé de fabrication du casque à sciure selon la revendication 6, dans lequel, après que la couche de sciure (21) et la couche de matériau en mousse (22) ont été pressées et formées à l'étape S2, les couches de sciure (21) de différentes formes et selon différents modes d'agencement forment des couches décoratives sur la surface du corps tampon (2).
